# EUROPEAN PATENT SPECIFICATION

(11) **EP 1 679 251 B1**
(45) Date of publication and mention of the grant of the patent: **13.05.2009**
(21) Application number: 05113064.9
(22) Date of filing: 29.12.2005
(51) Int. Cl.: B62D 11/04, B62D 13/00, B62D 59/04

(54) **Auxiliary drive and vehicle provided with an auxiliary drive**
Hilfsantrieb und mit einem Hilfsantrieb versehenes Fahrzeug
Entraînement auxiliaire et véhicule pourvu d'un entraînement auxiliaire

(30) Priority: 30.12.2004 NL 1027925
(43) Date of publication of application: 12.07.2006
(73) Proprietor: Reich KG, 35713 Eschenburg-Wissenbach (DE)
(72) Inventor: Beijersbergen van Henegouwen, Cornelis M., 5314 AP, Bruchem (NL); Staats, Kees Jan, 6721 XX, Bennekom (NL)
(74) Representative: van Westenbrugge, Andries

(56) References cited:
- EP-A- 0 827 898
- EP-A- 1 225 090
- EP-A- 1 394 024
- EP-A- 1 447 312
- DE-A1- 4 133 912
- FR-A- 2 786 456
- US-A- 3 826 324

## Description

The present invention relates to an auxiliary drive for driving a towed vehicle such as a caravan, comprising a drive to be fitted on the left and right of said vehicle, each drive comprising an electric motor and a drive roller driven by said motor, as well as a single controller for said electric motors and a control that influences said controller and thus said electric motors, which control comprises control members for moving said vehicle along a curved path.

Such auxiliary drives are generally known and are used mainly for manoeuvring caravans on, for example, camp sites if these have been uncoupled from the towing vehicle. However, it must be understood that other towed vehicles can also be moved by this means. A wide variety of types of constructions have been proposed in the art for moving the vehicle over short distances. With the majority of constructions a drive roller engages on the tyres of the wheels of the vehicle. The roller is rotated via an electric motor and a transmission that may or may not be interposed.

In other proposals a drive roller is pressed downwards until it comes into contact with the ground, and thus takes on an appreciable proportion of the vehicle/ground weight transfer, and movement can be achieved by driving such rollers.

Numerous constructions have been proposed for bringing the rollers into contact with either the ground or the wheels. Moreover, many constructions have been proposed for controlling the electric motors concerned.

Especially when manoeuvring larger, heavier vehicles, such as caravans and more particularly tandem-axle vehicles, it has been found that simple on/off switching of the motors does not have the desired effect. After all, appreciable torsion (and thus stress on the suspension) is produced for manoeuvring vehicles weighing more than 1,000 kg.

In particular, it has been found that following curves constitutes a problem when manoeuvring.

US 3,826,324 discloses a trailer mover according to the preamble of claim 1. Each wheel is provided with a drive drum engaging a wheel. A control box is provided having circuits and manually operated switches for placing DC motors in forward rotating condition or reverse rotating condition providing directional rotation of the drum. The circuits contained within the control box are arranged for operating the drive motors on either side of the frame associated with the wheels in a differential manner so that the trailer will pivot about either one of a selected wheel. The trailer mover according to this US patent specification provides a means for powering a trailer on its own wheels about a parking area in such a manner that the wheels may be powered in opposite directions for pivoting the trailer or the wheels may be rotated in one direction or another in order to move the trailer forward or in reverse.

DE 41 33 912 discloses a truck trailer combination in which the trailer is provided with electrically driven wheels. During driving of the truck-trailer combination the trailer wheels are energized by electro engines. Adjustment of the power through each of the engines is individual.

The aim of the present invention is to improve the manoeuvrability of relatively large, heavy vehicles, which are normally towed, with their own auxiliary drive, i.e. in a condition wherein the towed vehicle is no longer connected to the towing vehicle.

This aim is realised with the auxiliary drive described above in that said controller is embodied such that on receiving a signal from said control for moving along a curved path, this controller controls the electric motors in such a way that both produce a movement of said vehicle in the same direction and that said curved path is followed as a result of a difference in speed in said movement.

According to the present invention, when executing a curve it is no longer one motor is switched off and the other switched on, but both motors are switched on and provide rotation in the same direction. It has been found that this can lead to a problem with longer vehicles in particular in the case of tandem-axle vehicles but also in the case of single axle vehicles. An uncontrollable swinging behaviour can be produced as a result of the user continually making corrections.

According to the present invention it is proposed that drive is still provided on both sides of the vehicle when executing curves. However, as a result of applying a difference in speed in said drive on the left side and right side of the vehicle a curve can be executed. It has been found that a movement can be made in a very controlled manner in such a way. Right and left in the following must be seen as the position with respect to the longitudinal axis of the vehicle in plan view, that is to say two opposing wheels where opposing is perpendicular to the normal direction of movement of the vehicle. The user will have to push the button that serves for the curve concerned on his/her (remote) control in the conventional manner. However, as a result of this, driving of both electric motors will be achieved via the controller, with the effect described above.

As indicated above, such a construction is particularly suitable for tandem-axle vehicles. In this case when executing a curve, apart from the swinging mentioned above, the problem of torsion on the wheels arises that on one side are fitted a relatively short distance away from one another.

According to an advantageous embodiment of the invention the difference in speed between left and right is such that, if the speed is set at 100 % during travel in a straight line, the speed of the wheel turning fastest is 80 - 100 % of said speed and the speed of the wheel turning slowest is 10 - 30 %. More particularly, these values are 100 % and 20 %, respectively.

According to the invention, the controller is in particular so designed that when the vehicle is turned round both drives are provided at the same speed but in opposing directions. In this way accurate rotation about a vertical axis that passes through the longitudinal axis of the vehicle is possible.

According to a further advantageous embodiment, completion of the movement of the vehicle, after this has previously been initiated by the electric motors described above, is carried out gradually. That is to say, if the operator releases the button for travel, the power to the electric motors will not be cut off immediately. In general, the circuit will be so designed that if power to the electric motors is cut off the various current circuits are shortcircuited, as a result of which a braking effect is produced. Moreover, in some cases this braking effect is also promoted by the presence of a worm transmission. By, according to the invention, gradually reducing the power to the electric motors in any manner known in the art when the button for travel is released, the vehicle, such as a caravan, and more particularly the suspension thereof will be subjected to less severe stress from braking forces.

According to a further special feature of the present invention, if the relatively heavy vehicle is moving at high speed, that is to say at a speed that is at least 30 % of the maximum speed that can be produced with the auxiliary drive, when stopping, this stopping is effected gradually. That is to say, if the operator releases the button for travel, the power supply to the electric motors will not be interrupted immediately. After all, as a result of the relatively heavy-duty construction of the electric motors, cutting the power will have an appreciable braking effect on the vehicle. This is generally undesirable. Therefore, when the operating button is released at relatively high speed, the controller will provide for a gradual run-down of the rotation of the electric motors.

The speed control, or alternatively braking, described above can be implemented in any manner known in the art. According to an advantageous embodiment of the invention, the rotation of the electric motors is influenced by pulsing. This can relate to the shape of the pulse, the height of the pulse and the duration of the pulse or the period between the pulses.

The present invention also relates to a vehicle provided with the auxiliary drive described above.

The invention will be explained in more detail below with reference to an illustrative embodiment shown in the drawing. In the drawing:
Fig. 1 shows, in plan view, a vehicle provided with the auxiliary drive according to the invention; and
Fig. 2 shows the vehicle according to the present invention in plan view when executing a curve.

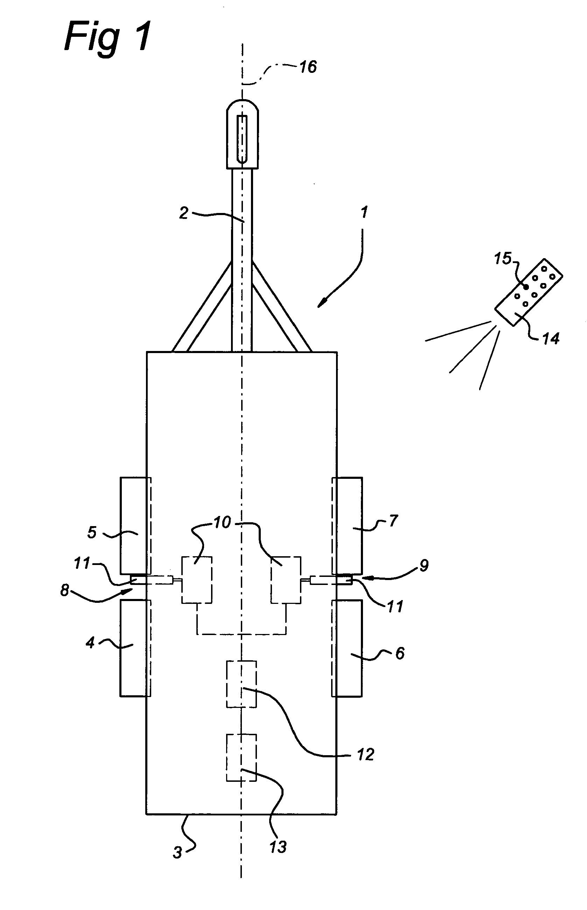

In Fig. 1 a vehicle to be towed is indicated by 1. This has a draw bar 2, to be coupled to the towing vehicle, and a rear end 3. The longitudinal axis of the vehicle, that is to say the direction in which it is moved by the towing vehicle, is indicated by 16. Wheels 4 - 7 are indicated on either side thereof. With this arrangement wheels 4 and 5 are fitted on the "left" side, whilst wheels 6 and 7 are fitted on the "right" side.

Wheels 4 - 7 are constructed such that they turn freely. However, the wheels 5 and 7 can be driven with the drives 8, 9 after uncoupling from the towing vehicle. For this purpose the drive rollers 11 that are connected to motors 10 can be brought towards the wheels 5, 7 concerned in some way or other. Safety features can optionally be fitted with this arrangement. A safety feature can be that the drive rollers can be driven only after the drive rollers concerned have been pressed against the wheels concerned. Another safety feature can be that movement of the drive rollers towards the wheels is impossible and/or pressing of the drive rollers against the wheels is cancelled if the caravan is coupled to a vehicle. It is also possible that in such a case an alarm is given, optionally in combination with blocking of the movement of the drive rollers towards the wheels. Such an alarm can comprise an audible signal. An indication of the coupling of a vehicle to be towed to a towing vehicle can be found in providing an electrical connection between the two vehicles with a plug. It will be understood that the above safety precautions can also be taken independently of the measures described above for executing a curve. There is a controller 12 that is powered by a battery 13. By this means it is possible to regulate both the movement of the drives 8, 9 towards said wheels and the rotation of the drive rollers. This relates both to direction and to rotational velocity. The drives 8 and 9 can be installed on the vehicle immediately during the construction thereof, but can also be fitted thereon at a later stage with, for example, an auxiliary frame.

The controller 12 is influenced, inter alia, by wireless control 14 that is provided with push buttons 15. Here the user can indicate whether the vehicle concerned has to be moved forwards, backwards, to the left, to the right and/or turned round. Moreover, it is possible to perform certain movements more slowly or more rapidly by repeated pressing of the buttons.

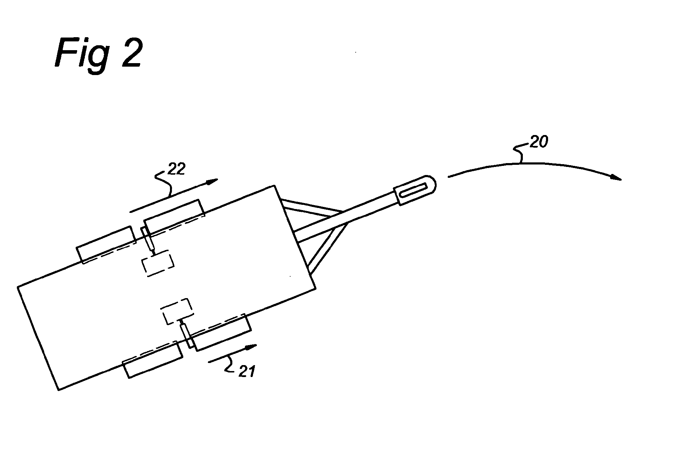

Negotiating a bend is shown in Fig. 2. This bend or curve is indicated by 20. This curve can be followed because both wheels 5 and 7 rotate (as do wheels 4 and 6). However, wheel 5 turns more rapidly, which is indicated by the somewhat longer arrow 22, whilst wheel 7 turns somewhat more slowly, which is indicated by arrow 21. Preferably the rotational velocity of wheel 5, that is to say of electric motor 10 associated with drive 8, is the same as the speed when moving in a straight line. However, the speed of motor 10 that is associated with drive 9 is lower and preferably approximately 20 % of the maximum speed. In this way the curve can be executed in a gradual, controlled manner without the problem of excessive torsion on wheels 4, 5 and 6, 7, respectively, arising, which is a problem when executing a curve with a tandem-axle vehicle. It must be understood that the appreciably slower movement described above of the one wheel by control of the relevant electric motor in the majority of cases will come down to controlled retardation. After all, if a wheel is driven on the one side and the wheel on the other side is not driven, this latter wheel (the inside curve wheel) will indeed move more slowly than the driven wheel under normal circumstances, but especially in the situation of a tandem-axle vehicle this latter wheel will rotate more rapidly than if only the added power (for example 20 %) is considered.

The controller 12 is so designed that when moving in a straight line and then switching off by means of releasing the relevant button 15 on the control 14 the electric motors 10 are not switched off immediately but assume an increasingly lower rotational velocity in a controlled manner. As a result a so-called "soft stop" is possible. As a result there is also better control of the vehicle. The various components of the auxiliary drive are also subjected to less severe stress. It will be understood that the relevant buttons 15 on the control can be designed for regulating the speed by repeated pressing and for determining the speed by the extent of the movement of the buttons 15 (joystick concept).

With the movements described above it is possible to execute every manoeuvring operation in a controlled manner, such as a curve to the left/right and curves in reverse. Backing into position is a combination of executing a number of curves as shown in Fig. 2 (forwards and backwards). It can be seen that it is particularly easy for the user to perform the operations concerned. After all, because he has experienced the pattern of movement of the vehicle once he will immediately understand how to react in future to execute curves of different radius or to perform a specific manoeuvring operation.

Following the above, variants and further embodiments will be immediately apparent to those skilled in the art. For instance, it is possible to make all wheels driven with a tandem-axle vehicle. The embodiment described above can be used both with such a tandem-axle vehicle and with a vehicle constructed with a single or triple axle, and constructions where the load on the axles and wheels, respectively, is removed by a roller replacing these also fall within the scope of the present invention. These fall within the scope of the appended claims and are obvious after the above.

## Claims

1. Auxiliary drive (8, 9, 12) for driving and steering a non-towed towed vehicle (1) such as a caravan, comprising a drive (8, 9) to be fitted on the left and right of said vehicle, each drive comprising an electric motor (10) and a drive roller (11) driven by said motor, as well as a single controller (12) for said electric motors (10) and a control (14) that influences said controller and thus said electric motors, which control comprises control members (15) for moving said vehicle along a curved path (20), **characterised in that** said controller (12) is embodied such that on receiving a signal from said control (14) for moving along a curved path (20), this controller controls the electric motors (10) in such a way that both produce a movement (21, 22) of said vehicle in the same direction and that said curved path (20) is followed as a result of a difference in speed in said movement.

2. Auxiliary drive according to Claim 1, wherein one of said drive rollers provides a drive that is at least twice as fast as that of said other drive roller.

3. Auxiliary drive according to one of the preceding claims, wherein said control and controller are embodied to move said vehicle in a straight line, wherein if the speed of the drive rollers when moving in a straight line is 100 %, the speed when executing a curve is such that one drive roller moves at the speed of 80 - 100 % and one drive roller moves at a speed of 10 - 30 %.

4. Auxiliary drive according to Claim 3, wherein the movement when executing a curve is such that one drive roller moves at a speed of approximately 100 % and one drive roller moves at a speed of approximately 20%.

5. Auxiliary drive according to Claim 4, wherein said control and controller are designed to move said vehicle in a straight line, wherein, if the speed of the drive rollers when moving in a straight line is 100 %, the speed of the drive rollers when turning said vehicle round is approximately 25 %.

6. Auxiliary drive according to one of the preceding claims, wherein said control is so embodied that when it is not operated said electric motors have been/are switched off, wherein said switching off comprises gradually reducing the energy supplied to the electric motors.

7. Auxiliary drive according to one of the preceding claims, wherein said speed regulation of said drive rollers comprises pulsed operation of said electric motors.

8. Vehicle provided with an auxiliary drive according to one of the preceding claims.

9. Vehicle according to Claim 8, comprising a multi-axle vehicle.

10. Vehicle according to Claim 9, wherein four drive rollers are present.

## Patentansprüche

1. Hilfsantrieb (8, 9, 12) zum Antreiben und Lenken eines nicht angehängten Anhängerfahrzeugs (1), wie etwa eines Wohnanhängers, der einen Antrieb (8, 9) umfasst, der auf der linken und rechten Seite des Fahrzeugs eingebaut werden soll, wobei jeder Antrieb einen Elektromotor (10) und eine von diesem Motor angetriebene Antriebswalze (11) ebenso wie eine einzige Steuerung bzw. Regelung (12) für die Elektromotoren (10) und ein Bedienteil (14) umfasst, welches die Steuerung bzw. Regelung und folglich die Elektromotoren beeinflusst, wobei das Bedienteil Bedienelemente (15) zum Bewegen des Fahrzeugs entlang eines gekrümmten Wegs (20) umfasst, **dadurch gekennzeichnet**, die Steuerung bzw. Regelung (12) derart ausgeführt ist, dass diese Steuerung bzw. Regelung bei Empfang eines Signals von dem Bedienteil (14) zum Bewegen entlang eines gekrümmten Wegs (20) die Elektromotoren (10) in einer derartigen Weise steuert bzw. regelt, dass beide eine Bewegung (21, 22) des Fahrzeugs in die gleiche Richtung erzeugen und dass als ein Ergebnis einer Geschwindigkeitsdifferenz in dieser Bewegung dem gekrümmten Weg (20) gefolgt wird.

2. Hilfsantrieb nach Anspruch 1, wobei eine der Antriebswalzen einen Antrieb bereitstellt, der wenigstens zweimal so schnell wie der der anderen Antriebswalze ist.

3. Hilfsantrieb nach einem der vorangehenden Ansprüche, wobei das Bedienteil und die Steuerung bzw. Regelung ausgeführt sind, um das Fahrzeug in einer geraden Linie zu bewegen, wobei, wenn die Geschwindigkeiten der Antriebswalzen beim Bewegen in einer geraden Linie 100% sind, die Geschwindigkeit beim Ausführen einer Kurve derart ist, dass eine Antriebswalze sich mit der Geschwindigkeit von 80 - 100% bewegt und eine Antriebswalze sich mit einer Geschwindigkeit von 10 - 30% bewegt.

4. Hilfsantrieb nach Anspruch 3, wobei die Bewegung beim Ausführen einer Kurve derart ist, dass eine Antriebswalze sich mit einer Geschwindigkeit von ungefähr 100% bewegt und eine Antriebswalze sich mit einer Geschwindigkeit von ungefähr 20% bewegt.

5. Hilfsantrieb nach Anspruch 4, wobei das Bedienteil und die Steuerung bzw. Regelung konstruiert sind, um das Fahrzeug in einer geraden Linie zu bewegen, wobei, wenn die Geschwindigkeit der Antriebswalzen beim Bewegen in einer geraden Linie 100% ist, die Geschwindigkeit der Antriebswalzen beim Wenden des Fahrzeugs ungefähr 25% ist.

6. Hilfsantrieb nach einem der vorangehenden Ansprüche, wobei das Bedienteil derart ausgeführt ist, dass die Elektromotoren ausgeschaltet wurden/wenden, wenn es nicht bedient wird, wobei das Ausschalten das allmähliche Verringern der an die Elektromotoren zugeführten Energie umfasst.

7. Hilfsantrieb nach einem der vorangehenden Ansprüche, wobei die Geschwindigkeitsregelung der Antriebswalzen den gepulsten Betrieb der Elektromotoren umfasst.

8. Fahrzeug, das mit einem Hilfsantrieb nach einem der vorangehenden Ansprüche versehen ist.

9. Fahrzeug nach Anspruch 8, das ein mehrachsiges Fahrzeug umfasst.

10. Fahrzeug nach Anspruch 9, wobei vier Antriebswalzen vorhanden sind.

## Revendications

1. Entraînement auxiliaire (8, 9, 12) pour entraîner et diriger un véhicule remorqué non remorqué (1) comme une caravane, comprenant un entraînement (8, 9) à monter à gauche et à droite dudit véhicule, chaque entraînement comprenant un moteur électrique (10) et un rouleau d'entraînement (11) entraîné par ledit moteur, ainsi qu'un contrôleur unique (12) pour lesdits moteurs électriques (10) et une commande (14) qui influence ledit contrôleur et ainsi lesdits moteurs électriques, ladite commande comprend des membres de commande (15) pour déplacer ledit véhicule le long d'un chemin incurvé (20), **caractérisé en ce que** ledit contrôleur (12) est réalisé de manière à ce que, à la réception d'un signal de ladite commande (14) pour un déplacement le long d'un chemin incurvé (20), ce contrôleur commande les moteurs électriques (10) de sorte qu'ils produisent tous les deux un déplacement (21, 22) dudit véhicule dans la même direction et que ledit chemin incurvé (20) soit suivi en raison d'une différence de vitesse dans ledit déplacement.

2. Entraînement auxiliaire selon la revendication 1, dans lequel l'un desdits rouleaux d'entraînement fournit un entraînement qui est au moins deux fois plus rapide que celui dudit autre rouleau d'entraînement.

3. Entraînement auxiliaire selon l'une des revendications précédentes, dans lequel ladite commande et ledit contrôleur sont réalisés pour déplacer ledit véhicule en ligne droite, dans lequel si la vitesse des rouleaux d'entraînement en se déplaçant en ligne droite est de 100 %, la vitesse en prenant un virage est telle qu'un rouleau d'entraînement se déplace à la vitesse de 80 à 100 % et un rouleau d'entraînement se déplace à une vitesse de 10 à 30 %.

4. Entraînement auxiliaire selon la revendication 3, dans lequel le déplacement en prenant un virage est tel qu'un rouleau d'entraînement se déplace à une vitesse d'environ 100 % et un rouleau d'entraînement se déplace à une vitesse d'environ 20%.

5. Entraînement auxiliaire selon la revendication 4, dans lequel ladite commande et ledit contrôleur sont conçus pour déplacer le véhicule en ligne droite, dans lequel, si la vitesse des rouleaux d'entraînement en déplacement en ligne droite est de 100 %, la vitesse des rouleaux d'entraînement en faisant tourner ledit véhicule est d'environ 25%.

6. Entraînement auxiliaire selon l'une des revendications précédentes, dans lequel ladite commande est réalisée de sorte que, lorsqu'elle n'est pas actionnée, lesdits moteurs électriques ont été/sont arrêtés, dans lequel ledit arrêt comprend la réduction progressive de l'énergie fournie aux moteurs électriques.

7. Entraînement auxiliaire selon l'une des revendications précédentes, dans lequel ladite régulation de vitesse desdits rouleaux d'entraînement comprend le fonctionnement par impulsion desdits moteurs électriques.

8. Véhicule pourvu d'un entraînement auxiliaire selon l'une des revendications précédentes.

9. Véhicule selon la revendication 8, comprenant un véhicule à essieux multiples.

10. Véhicule selon la revendication 9, dans lequel quatre rouleaux d'entraînement sont présents.
